# EUROPEAN PATENT SPECIFICATION

(11) **EP 4 560 124 B1**
(45) Date of publication and mention of the grant of the patent: **21.10.2026**
(21) Application number: 24211326.4
(22) Date of filing: 07.11.2024
(51) Int. Cl.: F01N 3/021

(54) **INTERNAL COMBUSTION ENGINE AND METHOD FOR ZERO POINT CALIBRATION OF A DIFFERENTIAL PRESSURE SENSOR**
VERBRENNUNGSMOTOR UND VERFAHREN ZUR NULLPUNKTKALIBRIERUNG EINES DIFFERENZDRUCKSENSORS
MOTEUR À COMBUSTION INTERNE ET PROCÉDÉ DE CALIBRAGE DU POINT ZÉRO D'UN CAPTEUR DE PRESSION DIFFÉRENTIELLE

(30) Priority: 21.11.2023 JP 2023197107
(43) Date of publication of application: 28.05.2025
(73) Proprietor: KABUSHIKI KAISHA TOYOTA JIDOSHOKKI, Kariya-shi, Aichi-ken, 448-8671 (JP)
(72) Inventor: KUBOTA, Takahiro, Kariya-shi, 448-8671 (JP)
(74) Representative: TBK

(56) References cited:
- EP-A1- 1 591 635
- EP-A2- 2 392 792
- DE-A1- 102004 007 000
- JP-A- 2020 033 943

## Description

The present invention relates to an internal combustion engine comprising an exhaust gas purification apparatus with a control device and a control method. More specifically, the present invention relates to an internal combustion engine comprising an exhaust gas purification apparatus with a control device for the exhaust gas purification apparatus of the internal combustion engine, and a control method executed by the control device.

### BACKGROUND ART

Known exhaust gas purification apparatuses include a diesel particulate filter (DPF) that is configured to remove particulate matter (PM) from an exhaust gas discharged from an internal combustion engine. For example, the exhaust gas purification apparatuses include a sensor that is configured to detect a differential pressure before and after the DPF (see, Japanese Patent Application Publication No.JP 2020-033943 A). The control device estimates the amount of PM accumulated in the DPF based on the differential pressure detected by the sensor. When the amount of PM reaches a predetermined value, the control device executes regeneration control to remove the PM from the DPF.

However, the value of the differential pressure read by the differential pressure sensor may vary depending on the conditions of the exhaust passage (e.g., temperature, pressure, humidity) or the performance of the differential pressure sensor (which may deteriorate due to an initial failure, or decreases over time, for example). If the value varies on the higher differential pressure side, regeneration control of the DPF is executed at shorter intervals. This gives the impression that the regeneration control of the DPF is executed more frequently than normal, and fuel economy may deteriorate because fuel is used for the regeneration control. In contrast, if the value varies on the lower differential pressure side, the regeneration control is executed with the PM excessively accumulated in the DPF, causing the DPF to reach a higher temperature than normal temperature.

Document DE 10 2004 007000 A1 discloses an engine exhaust emission control device which determines a differential pressure across a diesel particulate filter (DPF) to enable regeneration of the DPF at optimal timing. An ECU estimates the temperature of a differential pressure sensor provided for the DPF from the output of an intake air temperature sensor when the engine is not running, and determines an offset correction factor for correcting the sensor's offset error. The factor is set using the sensor output at this time as sensor's offset error, and stored in a memory. When detecting the differential pressure across the DPF, the temperature of the sensor at this time is estimated, and an offset correction factor that corresponds to this estimated temperature is selected. The sensor outputs are adjusted with this offset correction factor.

Document EP 2 392 792 A2 discloses a diagnostic apparatus for a filter, which includes: a differential pressure sensor that detects a differential pressure across the filter; an execution portion that executes a forced recovery process that oxidizes and thereby removes particulate matter accumulated in the filter by forcibly increasing a temperature of the filter; and a first diagnostic portion that determines that the filter is in a normal condition if there is a period where a value detected by the differential pressure sensor is on the increase, within a period where the forced recovery process is unexecuted.

Document EP 1 591 635 A1 discloses a regeneration control of a diesel particulate filter. The differential pressure upstream and downstream of a filter which traps particulate matter contained in the exhaust gas of a diesel engine is detected by a differential pressure sensor, and regeneration control is performed on the basis of this differential pressure. The detected value of the differential pressure sensor is calibrated on the basis of the detected value of the differential pressure sensor when the diesel engine is not operative. By preventing calibration of the output value of the differential pressure sensor from being performed unless at least one of a first condition, relating to the temperature when the diesel engine ceases to operate, and a second condition, relating to the differential pressure when the diesel engine ceases to operate, is satisfied, the output value of the differential pressure sensor is calibrated accurately and by means of a simple constitution.

An object of the present invention, which has been made in light of the above-mentioned circumstance, is directed to providing an internal combustion engine comprising an exhaust gas purification apparatus with a control device and a control method capable of executing DPF regeneration control at stable intervals.

### SUMMARY

This object is achieved by an internal combustion engine comprising an exhaust gas purification apparatus with a control device according to claim 1, and a control method according to claim 5. Advantageous further developments are as set forth in the dependent claims.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the embodiments together with the accompanying drawings in which:
FIG. 1 is a schematic diagram of an exhaust gas purification apparatus for an internal combustion engine according to an embodiment of the present invention;
FIG. 2 is a graph for explaining the circumstance of the present invention; and
FIG. 3 is a flowchart showing the flow of a zero point adjustment in calibration of a differential pressure sensor according to the present embodiment.

### DETAILED DESCRIPTION OF THE EMBODIMENTS

The following will describe an embodiment of the present invention in detail with reference to the accompanying drawings. The same or corresponding elements in the figure are given the same reference symbols and their descriptions will not be elaborated.

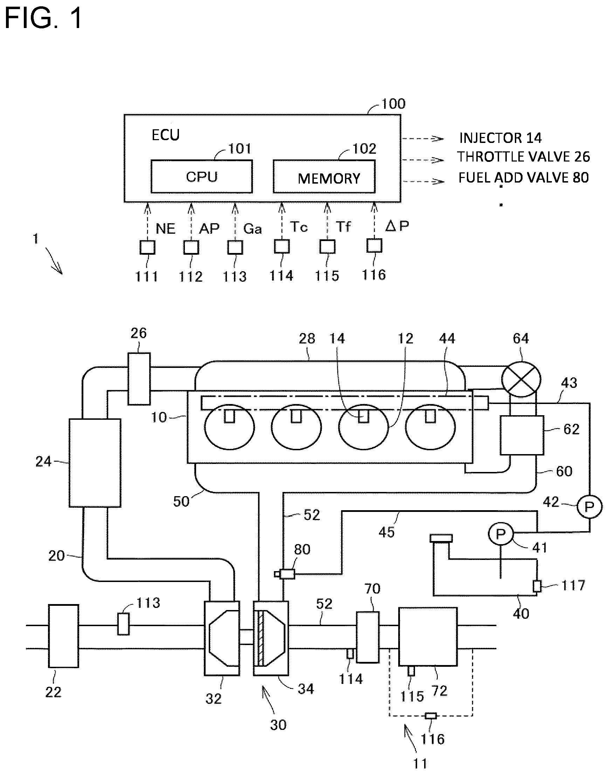

FIG. 1 is a schematic diagram of an exhaust gas purification apparatus 11 for an internal combustion engine according to an embodiment of the present invention. An engine 1 serves as a compression-autoignition type internal combustion engine (diesel engine) including the exhaust gas purification apparatus 11. The engine 1 is an internal combustion engine that executes compression-autoignition by injecting fuel from an injector (fuel injection valve) 14 into a combustion chamber formed in a cylinder 12 of an engine body 10. In the present embodiment, the engine 1 includes four cylinders 12. The engine 1 has an intake passage 20 in which an air cleaner 22, an intercooler 24, and a throttle valve (diesel throttle valve) 26 are disposed. Fresh air from which foreign matters are removed by the air cleaner 22 is supercharged (compressed) by a compressor 32 of a turbocharger 30, cooled by the intercooler 24, supplied to an intake manifold 28, and further supplied to the combustion chamber through an intake port.

The exhaust gas discharged from the combustion chamber is collected in an exhaust manifold 50 and released to the outside through an exhaust passage 52. The exhaust gas is partially recirculated to the intake manifold 28 via an exhaust gas recirculation (EGR) passage 60. In the EGR passage 60, an EGR cooler 62 and an EGR valve 64 are disposed.

In the exhaust passage 52, a turbine 34 of the turbocharger 30, a diesel oxidation catalyst (DOC) 70, and a DPF 72, which serves as the filter of the present invention, are arranged from the upstream section of the exhaust passage 52. The exhaust gas purification apparatus 11 includes the DOC 70 and the DPF 72. The DPF 72 is a filter that traps PM in the exhaust gas, and appropriately burns and removes the trapped PM so as to purify the exhaust gas. Although not illustrated, a urea addition valve and a selective catalytic reduction system may be disposed downstream of the DPF 72 of the exhaust gas purification apparatus 11. Instead of or in addition to the urea addition valve and the selective catalytic reduction system, a NOx storage-reduction (NSR) catalyst may be provided.

The fuel is stored in a fuel tank 40. The fuel in the fuel tank 40 is supplied to a high-pressure fuel pump 42 by a feed pump 41, and high-pressure fuel is discharged from the high-pressure fuel pump 42 to a common rail 44 through a fuel passage 43. The high-pressure fuel stored in the common rail 44 is injected by the injector 14 into the combustion chamber in the cylinder 12.

In the exhaust passage 52, a fuel addition valve 80 is disposed upstream of the DOC 70 (in this embodiment, upstream of the turbine 34). The fuel in the fuel tank 40 is supplied to the fuel addition valve 80 by the feed pump 41 through the fuel passage 45, and the fuel is added (injected) into the exhaust passage 52 when the fuel addition valve 80 opens.

An electronic control unit (ECU) 100 for the engine 1, which serves as the control device of the present invention, includes a central processing unit (CPU) 101, a memory 102 including read-only memory (ROM) and random access memory (RAM), and input/output ports for inputting and outputting various signals. The ECU 100 executes predetermined calculations based on information stored in the memory 102 and information sent from various sensors to control components, such as the injector 14, the throttle valve 26, the high-pressure fuel pump 42, and the fuel addition valve 80.

Specifically, the various sensors for sending information to the ECU 100 include an engine rotation speed sensor 111, an accelerator pedal sensor 112, an air flow meter 113, an oxidation catalyst temperature sensor 114, a DPF temperature sensor 115, and a differential pressure sensor 116. The engine rotation speed sensor 111 detects a rotation speed NE of the engine 1. The accelerator pedal sensor 112 detects an amount of accelerator pedal operation AP by the operator. The air flow meter 113 detects an intake amount (intake air amount) Ga of the engine 1. The oxidation catalyst temperature sensor 114 detects a temperature Tc of the DOC 70. It is preferable that the oxidation catalyst temperature sensor 114 detects the inlet temperature of the DOC 70. The DPF temperature sensor 115 detects the temperature Tf of the DPF 72 (the floor temperature of the DPF 72). The differential pressure sensor 116 detects a pressure difference (hereinafter also referred to as differential pressure) ΔP before and after the DPF 72 in the exhaust passage 52.

In the engine 1, the DPF 72 traps the PM contained in the exhaust gas discharged from the engine 1. When the amount of the PM accumulated in the DPF 72 reaches or exceeds a predetermined value, the ECU 100 executes regeneration control to regenerate the DPF 72 by increasing the temperature of the DPF 72 to burn and remove the accumulated PM. In order to increase the temperature of the DPF 72, the fuel is added from the fuel addition valve 80. The addition of the fuel causes the DOC 70 to generate heat (burn), thereby increasing the temperature of the exhaust gas flowing into the DPF 72.

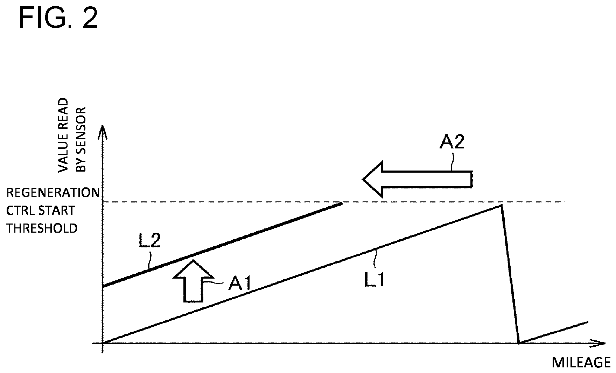

FIG. 2 is a graph for explaining the circumstance of the present invention. In the normal state, the PM is accumulated in the DPF 72 as the duration of use of a device (e.g., vehicle) equipped with the engine 1 (e.g., mileage of a vehicle) increases. Accordingly, as indicated by the line L1 in FIG. 2, the differential pressure of the exhaust gas before and after the DPF 72 increases from a minimum level when the exhaust gas flows in the exhaust passage 52 at a predetermined flow rate. The ECU 100 estimates the amount of the PM accumulated in the DPF 72 based on a value of the differential pressure read by the differential pressure sensor 116. When the value of the differential pressure reaches a regeneration control start threshold, the ECU 100 determines that the amount of the accumulated PM has reached a predetermined value, and executes the regeneration control of the DPF 72. This causes the PM in the DPF 72 to be removed, so that the differential pressure of the exhaust gas before and after the DPF 72, which is the differential pressure of the exhaust gas flowing at a predetermined rate, returns to approximately the minimum level.

The value read by the differential pressure sensor 116 may vary depending on conditions of the exhaust passage 52 (for example, temperature, pressure, humidity) or the performance of the differential pressure sensor 116 (which may deteriorate due to an initial failure or deterioration over time, for example). If the value read by the differential pressure sensor 116 varies on the higher differential pressure side, the variation of the value of the differential pressure changes as indicated by the arrow A1 from the normal variation of the value of the differential pressure indicated by the line L1 to the variation indicated by the line L2. In this case, the differential pressure rapidly reaches the regeneration control start threshold as indicated by the arrow A2, and the interval of the regeneration control of the DPF 72 therefore becomes shorter. This gives the operator the impression that the regeneration control of the DPF 72 is executed more frequently than normal, and fuel economy may deteriorate because fuel is used for the regeneration control. In contrast, if the value varies on the lower differential pressure side, the regeneration control is executed with the PM excessively accumulated in the DPF 72, causing the DPF 72 to reach a higher temperature than normal temperature.

Accordingly, when the ECU 100 executes the zero point adjustment in the calibration of the differential pressure sensor 116 in a situation where the differential pressure is not generated because the exhaust gas is not flowing through the exhaust passage 52, the ECU 100 sets the value read by the differential pressure sensor 116 to the zero point of the differential pressure sensor 116 if the differential pressure sensor 116 is not in a specific state where the differential pressure sensor 116 tends to read a value outside a predefined range, and the ECU 100 regards the value read by the differential pressure sensor 116 as being within the predefined range and sets the value read by the differential pressure sensor 116 to the zero point of the differential pressure sensor 116 if the differential pressure sensor 116 is in the specific state and the value read by the differential pressure sensor 116 is outside the predefined range. This allows the ECU 100 to execute the regeneration control of the DPF 72 at stable intervals.

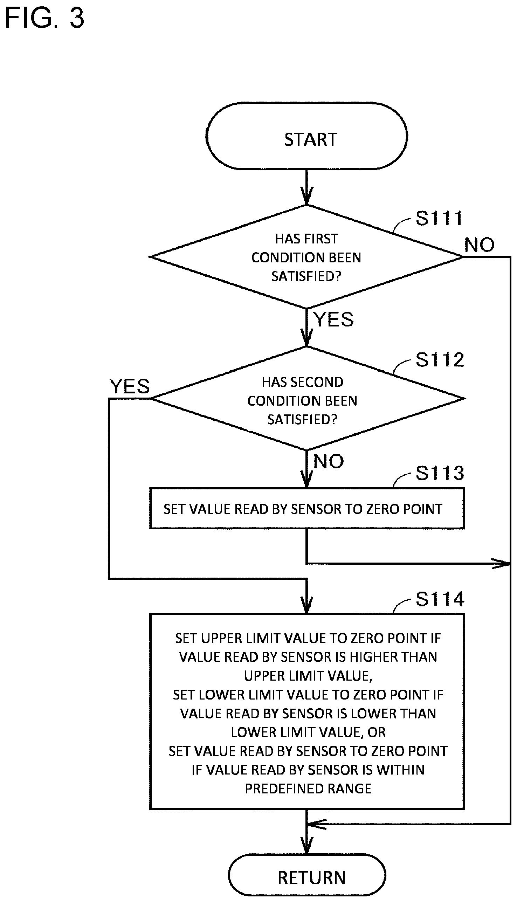

FIG. 3 is a flowchart showing the flow of the zero point adjustment in the calibration of the differential pressure sensor 116 according to the present embodiment. Specifically, the CPU 101 of the ECU 100 executes the zero point adjustment in the calibration of the differential pressure sensor 116 along the flow in FIG. 3 in a predetermined cycle.

First, the CPU 101 determines whether or not a first condition is satisfied (step S111). The first condition is a condition for executing calibration. Specifically, this is a condition that the differential pressure sensor 116 is supposed to be in a state where the differential pressure sensor 116 reads zero. For example, the first condition may be a condition that the engine 1 is not operating and the exhaust gas is therefore not flowing through the exhaust passage 52, or that the ignition is off.

When the CPU 101 determines that the first condition is satisfied (YES in step S111), the CPU 101 determines whether or not a second condition is satisfied (step S112). The second condition is that the differential pressure sensor 116 is in a specific state where the differential pressure sensor 116 tends to read a value outside a predefined range. For example, the specific state may be a state where the temperature of the differential pressure sensor 116 is a high temperature that is equal to or higher than a predetermined temperature. The specific state may be a state where the temperature inside the exhaust passage 52 in which the differential pressure sensor 116 is disposed is a high temperature that is equal to or higher than a predetermined temperature. Alternatively, the specific state may be a state where the temperature of the differential pressure sensor 116 is outside a predefined temperature range, or that the temperature inside the exhaust passage 52 in which the differential pressure sensor 116 is disposed is outside a predetermined temperature range.

When the CPU 101 determines that the second condition is not satisfied (NO in step S112), the CPU 101 sets the value read by the differential pressure sensor 116 to the zero point (step S113). For example, when the differential pressure sensor 116 reads the differential pressure of a (kPa), the CPU 101 sets a (kPa) to the zero point. Accordingly, in the measurement after this zero point adjustment, the CPU 101 subtracts a (kPa) from a value read by the differential pressure sensor 116 to obtain a measured value of the differential pressure.

In a situation where the CPU 101 determines that the second condition is satisfied (YES in step S112), if the value read by the differential pressure sensor 116 is outside the predefined range, the CPU 101 regards the value as being within the predefined range and adjusts the zero point of the differential pressure sensor 116. For example, if the value read by the differential pressure sensor 116 is higher than the upper limit value of the predefined range, the CPU 101 regards the value read by the differential pressure sensor 116 as the upper limit value and sets the upper limit value to the zero point. Similarly, if the value read by the differential pressure sensor 116 is lower than the lower limit value of the predefined range, the CPU 101 regards the value as the lower limit value and sets the lower limit value to the zero point. If the differential pressure sensor 116 reads a value within the predefined range, the CPU 101 sets the value read by the differential pressure sensor 116 to the zero point (step S114). In the present embodiment, the predefined range is an accuracy range of the zero point of a standard differential pressure sensor that serves as the differential pressure sensor 116.

For example, the accuracy range (i.e., the predefined range of the present invention) may be expressed by ±b (kPa). When the differential pressure sensor 116 reads a differential pressure of c (kPa) and c is higher than +b (c > +b), the CPU 101 sets b (kPa) to 0 (kPa). In the measurement after this zero point adjustment, the CPU 101 subtracts b (kPa) from a value read by the differential pressure sensor 116 to obtain a measured value of the differential pressure. When c is lower than -b (c < -b), the CPU 101 sets -b (kPa) to 0 (kPa). In the measurement after this zero point adjustment, the CPU 101 adds b (kPa) to a value read by the differential pressure sensor 116 to obtain a measured value of the differential pressure. When c is within the range of ±b

(kPa) (-b ≤ c ≤ b), the CPU 101 sets c (kPa) to 0 (kPa). In the measurement after this zero point adjustment, the CPU 101 subtracts c (kPa) from a value read by the differential pressure sensor 116 to obtain a measured value of the differential pressure.

When the CPU 101 determines that the first condition is not satisfied (NO in step S111), the CPU 101 returns to an upper process in the flow.

### Modification

(1) In the present embodiment, the engine 1 is provided in a vehicle. However, the present invention is not limited thereto, and the engine 1 may be provided in a device other than a vehicle, such as a generator or a compressor.
(2) In the present embodiment, the number of times the second condition is satisfied in step S112 in FIG. 3 may be counted. When the number of times the second condition is satisfied reaches a predetermined number, a sensor lamp on a meter panel may light up to notify it, or information may be transmitted to an external server, such as a server of a manufacturer of the engine 1, to notify it. This allows the operator and the manufacturer to recognize that the number of times the second condition is satisfied reaches a predetermined number, and allows them to take a measure.
(3) In the present embodiment, as shown in step S112 in FIG. 3, when the second condition is satisfied once, the zero point adjustment is executed in step S114. However, the present invention is not limited thereto. This flow may be modified so that the zero point adjustment may be executed in step S114 using a representative value (e.g., average value, median value, or mode) of the value read by the differential pressure sensor 116 when the second condition is satisfied multiple times.
(4) In the present embodiment, as shown in step S114 in FIG. 3, if the value read by the differential pressure sensor 116 is outside the predefined range, the CPU 101 sets the upper limit value or lower limit value of the predefined range to the zero point. However, the present invention is not limited thereto. The CPU 101 may set a value corresponding to a degree to which the predefined range is exceeded to the zero point. For example, the predefined range may be expressed by ±b (kPa). When the differential pressure sensor 116 reads a differential pressure of c (kPa) and c (kPa) is equal to or lower than +2b and higher than +b (+2b ≥ c > +b), the CPU 101 sets b/2 (kPa) to 0 (kPa). In the measurement after this zero point adjustment, the CPU 101 subtracts b/2 (kPa) from a value read by the differential pressure sensor 116 to obtain a measured value of the differential pressure. When c is higher than +2b (c > +2b), the CPU 101 sets b (kPa) to 0 (kPa). In the measurement after this zero point adjustment, the CPU 101 subtracts b (kPa) from a value read by the differential pressure sensor 116 to obtain a measured value of the differential pressure. When c is equal to or higher than -2b and lower than -b (-2b ≤ c < -b), the CPU 101 sets -b/2 (kPa) to 0 (kPa). In the measurement after this zero point adjustment, the CPU 101 adds b/2 (kPa) to a value read by the differential pressure sensor 116 to obtain a measured value of the differential pressure. When c is lower than -2b (c < -2b), the CPU 101 sets -b (kPa) to 0 (kPa). In the measurement after this zero point adjustment, the CPU 101 adds b (kPa) to a value read by the differential pressure sensor 116 to obtain a measured value of the differential pressure.
(5) The present embodiment and modifications may be considered as disclosure of the exhaust gas purification apparatus 11, the engine 1, or the vehicle. The present embodiment and modifications may be also considered as a disclosure of a control method or a control program executed by a control device for the exhaust gas purification apparatus 11, the engine 1, or the vehicle.

(1) The following will describe advantageous effects of the present invention. As illustrated in FIG. 1, the ECU 100 serves as a control device for the exhaust gas purification apparatus 11 of the engine 1. The exhaust gas purification apparatus 11 includes: the DPF 72 disposed in the exhaust passage 52 of the engine 1 and trapping the PM contained in the exhaust gas; and the differential pressure sensor 116 for reading a value of a differential pressure between the inlet and the outlet of the DPF 72. As illustrated in FIG. 3, when the ECU 100 executes the zero point adjustment in the calibration of the differential pressure sensor 116 in a situation where the differential pressure is not generated because the exhaust gas is not flowing through the exhaust passage 52, the ECU 100 sets a value read by the differential pressure sensor 116 to the zero point of the differential pressure sensor 116 if the differential pressure sensor 116 is not in the specific state where the differential pressure sensor 116 tends to read a value outside the predefined range (e.g., step S113), and the ECU 100 regards the value read by the differential pressure sensor 116 as being within the predefined range and sets the value read by the differential pressure sensor 116 to the zero point of the differential pressure sensor 116 if the differential pressure sensor 116 is in the specific state and the value read by the differential pressure sensor 116 is outside the predefined range (e.g., step S114).
   This allows the zero point of the differential pressure sensor 116 to be appropriately adjusted even if the specific state continues, thereby allowing the ECU 100 to appropriately estimate the amount of the PM accumulated in the DPF 72. This therefore allows the ECU 100 to execute the regeneration control of the DPF 72 at stable intervals.
(2) The specific state may be a state where the temperature inside the exhaust passage 52 is equal to or higher than a predetermined temperature. This allows the zero point of the differential pressure sensor 116 to be appropriately adjusted even if the temperature inside the exhaust passage 52 is equal to or higher than the predetermined temperature continuously.
(3) The temperature inside the exhaust passage 52 according to (2) may be the temperature inside the DPF 72. This allows the zero point of the differential pressure sensor 116 to be appropriately adjusted even if the temperature inside the DPF 72 is equal to or higher than the predetermined temperature continuously.
(4) As shown in step S114 in FIG. 3, if the value read by the differential pressure sensor 116 is higher than the upper limit value of the predefined range, the ECU 100 may regard the value read by the differential pressure sensor 116 as the upper limit value and set the upper limit value to the zero point, and if the value read by the differential pressure sensor 116 is lower than the lower limit value of the predefined range, the ECU 100 may regard the value read by the differential pressure sensor 116 as the lower limit value and set the lower limit value to the zero point. This allows the zero point of the differential pressure sensor 116 to be appropriately adjusted.
(5) As shown in step S114 in FIG. 3, if the differential pressure sensor 116 is in the specific state and the value read by the differential pressure sensor 116 is within the predefined range, the ECU 100 may set the value read by the differential pressure sensor 116 to the zero point. This allows the zero point of the differential pressure sensor 116 to be appropriately adjusted.

The embodiment and modifications disclosed herein may be appropriately combined. The embodiment and modifications disclosed herein are illustrative in all aspects and not restrictive. The scope of the present invention is defined by the claims, rather than the description of the embodiment, and is intended to include all modifications within the meaning and scope of the claims.

## Claims

1. An internal combustion engine (1) comprising an exhaust gas purification apparatus (11) with a control device (100), the exhaust gas purification apparatus (11) comprising:
a filter (72) disposed in an exhaust passage (52) of the internal combustion engine (1) and configured to trap particulate matter contained in an exhaust gas; and
a sensor (116) configured to read a value of a differential pressure between an inlet and an outlet of the filter (72),
**characterized in that**
the control device (100) is configured to execute a zero point adjustment in calibration of the sensor (116) in a situation where the differential pressure is not generated because the exhaust gas is not flowing through the exhaust passage (52), the zero point adjustment being executed
if the sensor (116) is not in a specific state where the sensor (116) tends to read a value outside a predefined range, the control device (100) sets the value read by the sensor (116) to a zero point of the sensor (116), and
if the sensor (116) is in the specific state and the value read by the sensor (116) is outside the predefined range, the control device (100) regards the value read by the sensor (116) as being within the predefined range and adjusts the zero point of the sensor (116)
wherein
if the value read by the sensor (116) is higher than an upper limit value of the predefined range, the control device (100) is configured to regard the value read by the sensor (116) as the upper limit value and to set the upper limit value to the zero point, and
if the value read by the sensor (116) is lower than a lower limit value of the predefined range, the control device (100) is configured to regard the value read by the sensor (116) as the lower limit value and to set the lower limit value to the zero point.

2. The internal combustion engine (1) according to claim 1, **characterized in that**
the specific state is a state where a temperature inside the exhaust passage (52) is equal to or higher than a predetermined temperature.

3. The internal combustion engine (1) according to claim 2, **characterized in that**
the temperature inside the exhaust passage (52) is a temperature inside the filter (72).

4. The internal combustion engine (1) according to claim 1, **characterized in that**
if the sensor (116) is in the specific state and the value read by the sensor (116) is within the predefined range, the control device (100) is configured to set the value read by the sensor (116) to the zero point.

5. A control method executed by a control device (100) of an exhaust gas purification apparatus (11) of an internal combustion engine (1), the exhaust gas purification apparatus (11) comprising:
a filter (72) disposed in an exhaust passage (52) of the internal combustion engine (1) and trapping particulate matter contained in an exhaust gas; and
a sensor (116) for reading a value of a differential pressure between an inlet and an outlet of the filter (72), **characterized in that**
when the control device (100) executes a zero point adjustment in calibration of the sensor (116) in a situation where the differential pressure is not generated because the exhaust gas is not flowing through the exhaust passage (52), the control method includes:
setting the value read by the sensor (116) to a zero point of the sensor (116) if the sensor (116) is not in a specific state where the sensor (116) tends to read a value outside a predefined range; and
regarding the value read by the sensor (116) as being within the predefined range and adjusting the zero point of the sensor (116) if the sensor (116) is in the specific state and the value read by the sensor (116) is outside the predefined range
wherein
if the value read by the sensor (116) is higher than an upper limit value of the predefined range, the value read by the sensor (116) is regarded as the upper limit value and the upper limit value is set to the zero point, and
if the value read by the sensor (116) is lower than a lower limit value of the predefined range, the value read by the sensor (116) is regarded as the lower limit value and the lower limit value is set to the zero point.

## Patentansprüche

1. Verbrennungsmotor (1), der eine Abgasreinigungsvorrichtung (11) mit einem Steuergerät (100) umfasst,
wobei die Abgasreinigungsvorrichtung (11) umfasst:
einen Filter (72), der in einem Abgaskanal (52) des Verbrennungsmotors (1) angeordnet und eingerichtet ist, um in einem Abgas enthaltene Stoffpartikel aufzufangen; und
einen Sensor (116), der eingerichtet ist, um einen Wert eines Differenzdrucks zwischen einem Einlass und einem Auslass des Filters (72) zu lesen,
**dadurch gekennzeichnet, dass**
das Steuergerät (100) eingerichtet ist, um eine Nullpunktjustierung bei Kalibrierung des Sensors (116) in einer Situation durchzuführen, in der der Differenzdruck nicht erzeugt wird, weil das Abgas nicht durch den Abgaskanal (52) strömt, wobei die Nullpunktjustierung dadurch durchgeführt wird, dass
wenn der Sensor (116) nicht in einem spezifischen Zustand ist, in dem der Sensor (116) dazu neigt, einen Wert außerhalb eines vordefinierten Bereichs zu lesen, das Steuergerät (100) den von dem Sensor (116) gelesenen Wert auf einen Nullpunkt des Sensors (116) einstellt, und
wenn der Sensor (116) in dem spezifischen Zustand ist und der von dem Sensor (116) gelesene Wert außerhalb des vordefinierten Bereichs ist, das Steuergerät (100) den von dem Sensor (116) gelesenen Wert als innerhalb des vordefinierten Bereichs liegend ansieht und den Nullpunkt des Sensors (116) einstellt.
wobei
wenn der von dem Sensor (116) gemessene Wert höher ist als ein oberer Grenzwert des vorbestimmten Bereichs, das Steuergerät (100) eingerichtet ist, um den von dem Sensor (116) gelesenen Wert als den oberen Grenzwert anzusehen und den oberen Grenzwert auf den Nullpunkt einzustellen, und
wenn der von dem Sensor (116) gelesene Wert kleiner ist als ein unterer Grenzwert des vorbestimmten Bereichs, das Steuergerät (100) eingerichtet ist, um den von dem Sensor (116) gelesenen Wert als den unteren Grenzwert anzusehen und den unteren Grenzwert auf den Nullpunkt einzustellen.

2. Verbrennungsmotor (1) gemäß Anspruch 1, **dadurch gekennzeichnet, dass**
der spezifische Zustand ein Zustand ist, in dem eine Temperatur im Inneren des Abgaskanals (52) gleich oder höher als eine vorbestimmte Temperatur ist.

3. Verbrennungsmotor (1) gemäß Anspruch 2, **dadurch gekennzeichnet, dass**
die Temperatur im Inneren des Abgaskanals (52) eine Temperatur im Inneren des Filters (72) ist.

4. Verbrennungsmotor (1) gemäß Anspruch 1, **dadurch gekennzeichnet, dass**
wenn der Sensor (116) in dem spezifischen Zustand ist und der von dem Sensor (116) gelesene Wert innerhalb des vordefinierten Bereichs ist, das Steuergerät (100) eingerichtet ist, um den von dem Sensor (116) gelesenen Wert auf den Nullpunkt einzustellen.

5. Steuerungsverfahren, das von einem Steuergerät (100) einer Abgasreinigungsvorrichtung (11) eines Verbrennungsmotors (1) durchgeführt wird, wobei die Abgasreinigungsvorrichtung (11) umfasst:
einen Filter (72), der in einem Abgaskanal (52) des Verbrennungsmotors (1) angeordnet ist und in einem Abgas enthaltene Stoffpartikel auffängt; und
einen Sensor (116) zum Lesen eines Wertes eines Differenzdrucks zwischen einem Einlass und einem Auslass des Filters (72), **dadurch gekennzeichnet, dass**
wenn das Steuergerät (100) eine Nullpunktjustierung bei Kalibrierung des Sensors (116) in einer Situation durchführt, in der der Differenzdruck nicht erzeugt wird, weil das Abgas nicht durch den Abgaskanal (52) strömt, das Steuerungsverfahren aufweist:
Einstellen des von dem Sensor (116) gelesenen Werts auf einen Nullpunkt des Sensors (116), wenn der Sensor (116) nicht in einem spezifischen Zustand ist, in dem der Sensor (116) dazu neigt, einen Wert außerhalb eines vordefinierten Bereichs zu lesen; und
Ansehen des von dem Sensor (116) gelesenen Werts als innerhalb des vordefinierten Bereichs liegend, und Einstellen des Nullpunkts des Sensors (116), wenn der Sensor (116) in dem spezifischen Zustand ist und der von dem Sensor (116) gelesene Wert außerhalb des vordefinierten Bereichs ist
wobei
wenn der von dem Sensor (116) gelesene Wert höher ist als ein oberer Grenzwert des vordefinierten Bereichs, der von dem Sensor (116) gelesene Wert als der obere Grenzwert angesehen wird und der obere Grenzwert auf den Nullpunkt eingestellt wird, und
wenn der von dem Sensor (116) gelesene Wert kleiner ist als ein unterer Grenzwert des vordefinierten Bereichs, der von dem Sensor (116) gelesene Wert als der untere Grenzwert angesehen wird und der untere Grenzwert auf den Nullpunkt eingestellt wird.

## Revendications

1. Moteur à combustion interne (1) comprenant un appareil de purification de gaz d'échappement (11) avec un dispositif de commande (100),
l'appareil de purification de gaz d'échappement (11) comprenant :
un filtre (72) disposé dans un passage d'échappement (52) du moteur à combustion interne (1) et configuré pour piéger de la matière particulaire contenue dans un gaz d'échappement ; et
un capteur (116) configuré pour lire une valeur d'une pression différentielle entre une entrée et une sortie du filtre (72),
**caractérisé en ce que**
le dispositif de commande (100) est configuré pour effectuer un ajustement du point zéro lors d'un étalonnage du capteur (116) dans une situation dans laquelle la pression différentielle n'est pas générée, car le gaz d'échappement ne s'écoule pas par le passage d'échappement (52), l'ajustement du point zéro étant effectué de telle sorte que
si le capteur (116) n'est pas dans un état spécifique dans lequel le capteur (116) a tendance à lire une valeur en dehors d'une plage prédéfinie, le dispositif de commande (100) règle la valeur lue par le capteur (116) à un point zéro du capteur (116), et
si le capteur (116) est dans l'état spécifique et que la valeur lue par le capteur (116) est en dehors de la plage prédéfinie, le dispositif de commande (100) considère la valeur lue par le capteur (116) comme étant dans la plage prédéfinie et règle le point zéro du capteur (116)
dans lequel
si la valeur lue par le capteur (116) est supérieure à une valeur limite supérieure de la plage prédéfinie, le dispositif de commande (100) est configuré pour considérer la valeur lue par le capteur (116) comme la valeur limite supérieure et pour régler la valeur limite supérieure au point zéro, et
si la valeur lue par le capteur (116) est inférieure à une valeur limite inférieure de la plage prédéfinie, le dispositif de commande (100) est configuré pour considérer la valeur lue par le capteur (116) comme la valeur limite inférieure et pour régler la valeur limite inférieure au point zéro.

2. Moteur à combustion interne (1) selon la revendication 1, **caractérisé en ce que**
l'état spécifique est un état dans lequel une température à l'intérieur du passage d'échappement (52) est égale ou supérieure à une température prédéterminée.

3. Moteur à combustion interne (1) selon la revendication 2, **caractérisé en ce que**
la température à l'intérieur du passage d'échappement (52) est une température à l'intérieur du filtre (72).

4. Moteur à combustion interne (1) selon la revendication 1, **caractérisé en ce que**
si le capteur (116) est dans l'état spécifique et que la valeur lue par le capteur (116) est dans la plage prédéfinie, le dispositif de commande (100) est configuré pour régler la valeur lue par le capteur (116) au point zéro.

5. Procédé de commande effectué par un dispositif de commande (100) d'un appareil de purification de gaz d'échappement (11) d'un moteur à combustion interne (1), l'appareil de purification de gaz d'échappement (11) comprenant :
un filtre (72) disposé dans un passage d'échappement (52) du moteur à combustion interne (1) et piégeant de la matière particulaire contenue dans un gaz d'échappement ; et
un capteur (116) pour lire une valeur d'une pression différentielle entre une entrée et une sortie du filtre (72), **caractérisé en ce que**
lorsque le dispositif de commande (100) effectue un ajustement du point zéro lors d'un étalonnage du capteur (116) dans une situation dans laquelle la pression différentielle n'est générée, car le gaz d'échappement ne s'écoule pas par le passage d'échappement (52), le procédé de commande comporte :
régler la valeur lue par le capteur (116) à un point zéro du capteur (116) si le capteur (116) n'est pas dans un état spécifique dans lequel le capteur (116) a tendance à lire une valeur en dehors d'une plage prédéfinie ; et
considérer la valeur lue par le capteur (116) comme étant dans la plage prédéfinie et régler le point zéro du capteur (116) si le capteur (116) est dans l'état spécifique et que la valeur lue par le capteur (116) est en dehors de la plage prédéfinie
dans lequel
si la valeur lue par le capteur (116) est supérieure à une valeur limite supérieure de la plage prédéfinie, la valeur lue par le capteur (116) est considérée comme la valeur limite supérieure et la valeur limite supérieure est réglée au point zéro, et
si la valeur lue par le capteur (116) est inférieure à une valeur limite inférieure de la plage prédéfinie, la valeur lue par le capteur (116) est considérée comme la valeur limite inférieure et la valeur limite inférieure est réglée au point zéro.
